Europäisches Patentamt

(19) European Patent Office

Office européen des brevets

(11) Publication number: **0 110 899**
**B1**

(12) **EUROPEAN PATENT SPECIFICATION**

(45) Date of publication of patent specification: **21.01.87**

(51) Int. Cl.⁴: **H 05 B 6/30,** C 03 B 23/025, F 27 B 14/10

(21) Application number: **83901557.5**

(22) Date of filing: **11.04.83**

(86) International application number:
**PCT/US83/00512**

(87) International publication number:
**WO 83/04364 08.12.83 Gazette 83/28**

(54) **MODIFIED ZIRCONIA INDUCTION FURNACE.**

(30) Priority: **28.05.82 US 383386**
**28.05.82 US 383066**

(43) Date of publication of application:
**20.06.84 Bulletin 84/25**

(45) Publication of the grant of the patent:
**21.01.87 Bulletin 87/04**

(84) Designated Contracting States:
**BE DE FR NL SE**

(56) References cited:
**DE-A-2 926 177**
**DE-A-3 025 680**
**FR-A-2 401 103**
**US-A-3 362 803**
**US-A-3 404 973**
**US-A-4 052 153**
**US-A-4 090 851**
**US-A-4 159 891**
**US-A-4 356 152**
**Optical Fiber Transmission II Technical Digest,**
**(Tu 85-1), issued FEBRUARY 1977, By Runk, "A**
**Zirconia Induction Furnace For Drawing**
**Precision Silica Wave Guides".**

(73) Proprietor: **Western Electric Company,
Incorporated
222 Broadway
New York, NY 10038 (US)**

(72) Inventor: **ANDREJCO, Matthew, Julius
R.D. No 2, 203 Hanover Drive
Wrightstown, NJ 08562 (US)**
Inventor: **PAEK, Un Chul
8 Lake Shore Drive (R.D. 1)
Lawrenceville, NJ 08648 (US)**
Inventor: **SCHROEDER, Charles Martin, Jr.
R.D. No 2, P.O. Box 202
Wrightstown, NJ 08562 (US)**

(74) Representative: **Blumbach Weser Bergen
Kramer Zwirner Hoffmann Patentanwälte
Radeckestrasse 43
D-8000 München 60 (DE)**

## Description

Technical Field

The invention is directed to a furnace for heating a lightguide preform to an elevated temperature in order to draw a fiber therefrom and to a method of fabricating a lightguide fiber.

Background of the Invention

The development of low loss, fused silica lightguide fiber over the last few years has led to the investigation of high temperature (e.g., approximately 2000°C) heat sources for the drawing of high strength fiber from a lightguide preform. Of the possible heat sources, the oxy-hydrogen torch, the $CO_2$ laser and a few induction and resistance furnaces have been employed for drawing the high silica fibers. The torch method, while inexpensive, cannot maintain a uniform diameter over long lengths of drawn fiber. The $CO_2$ laser provides the cleanest drawing atmosphere, but requires special optical designs to radially distribute the energy for drawing and is limited in power, while resistance furnaces require an inert protective atmosphere to prevent oxidation of the heating element.

An induction furnace is basically comprised of a hollow, centrally located, tubular susceptor surrounded by an insulating material. An induction coil surrounds the insulating material to provide an alternating electromagnetic field when energized. The field couples to the susceptor, elevating the temperature thereof, forming a hot zone therein. A glass lightguide preform is then introduced into the hot zone to reflow a portion thereof from which the lightguide fiber is drawn.

High temperature induction furnaces provide high thermal inertia, stability, and radially symmetric heating. Most induction furnaces, however, use graphite or refractory metallic susceptors which require the flowing of protective atmospheres during operation to remove contaminants migrating from the inside surface of the susceptor. As a result, such furnaces have limited susceptor life and have some degree of contamination in the furnace atmosphere.

One induction furnace designed to overcome the foregoing problems is described in an article entitled "A Zirconia Induction Furnace For Drawing Precision Silica Wave Guides" by R. B. Runk in the *Optical Fiber Transmission II* technical digest (Tu B5—1), February 22—24, 1977. That furnace uses a cylindrical susceptor made of yttria stabilized zirconium dioxide. The susceptor has a long life expectancy and minimal furnace atmosphere contamination in an oxygen-bearing atmosphere. Such a furnace has been shown to be most effective in drawing lightguide fiber from a preform. However, it has been found that after extended use, microscopic particles of zirconium dioxide migrate from the susceptor onto the preform and/or the fiber being drawn from the lightguide preform. The zirconium dioxide particles substantially weaken the drawn fiber resulting in unacceptable product.

Accordingly, there is a need for a long life, high temperature induction furnace that is substantially contaminant-free during the drawing process in order to produce high strength fibers.

From FR—A—2401103 and DE—A—3025680 it is already known to provide on the inside surface of the susceptor tube of an induction furnace a coating preventing contaminants from migrating to a lightguide preform heated in said furnace. The coatings consist of pyrolytically deposited carbon and of a platinum metal, respectively.

Summary of the Invention

The invention as defined in Claims 1 and 4 overcomes the foregoing problems by an induction furnace having a centrally located tubular susceptor surrounded by an insulator and an induction coil, the susceptor having a thin coating of the lightguide preform material located on at least a portion of the inside surface of the susceptor. Optionally a cylinder may be positioned between the insulator and the susceptor in spaced relationship to the susceptor. Still optionally a lightguide preform material may be placed in the space between the susceptor and the cylinder.

Brief Description of the Drawings

Fig. 1 is a cross-sectional view of a prior art induction heating furnace;

FIG. 2 is a cross-sectional view of one embodiment of the instant induction heating furnace according to the invention; and

FIG. 3 is a cross-sectional view of another embodiment of the instant induction heating furnace.

FIGS. 4, 5 and 6 are cross-sectional views of various other embodiments of the instant induction heating furnace.

Detailed Description

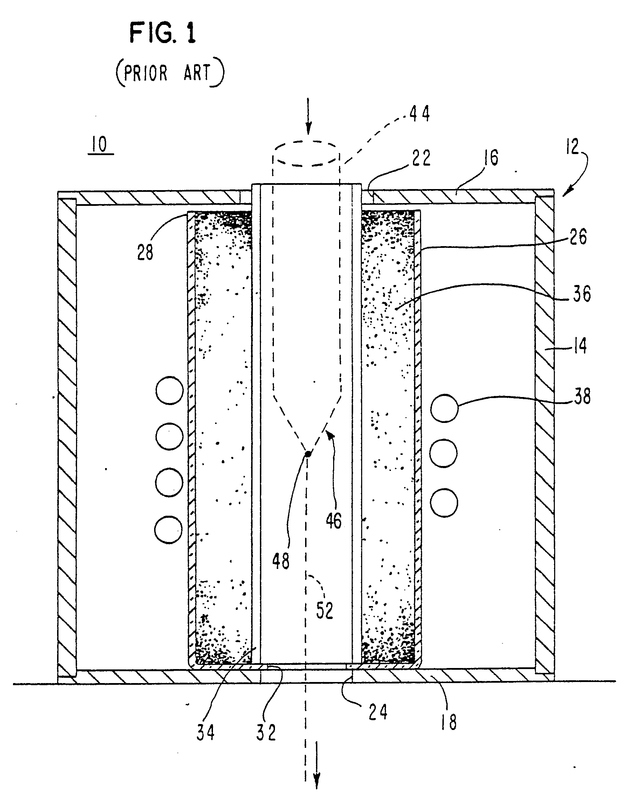

FIG. 1 depicts a prior art high temperature induction furnace generally referred to by the numeral 10. The furnace 10 is comprised of a cylindrical housing 12 having a sidewall 14, a top portion 16 and a bottom portion 18. The top portion 16 has a central opening 22 therein which is vertically aligned with an opening 24 in the bottom portion 18. A silica beaker 26, open at the top 28 has a circular aperture 32 in the bottom surface thereof which is axially aligned with the openings 22 and 24. A tubular susceptor 34 is centrally located within the beaker 26. The annular volume between the inside surface of the beaker 26 and the outer surface of the tubular susceptor 34 is filled with a zirconium insulating grain 36. An RF induction coil 38, of circular or rectangular cross section, connected to a power source (not shown) is mounted about the beaker 26. The housing 12 is made of copper or the like which is water cooled and acts as a shield to reduce stray radio-frequency fields. The susceptor 34 is 8 weight per cent yttria stabilized zirconium dioxide, composition 1372 of Zircoa Company, Solon, Ohio.

The low temperature resistivity of the zirconium dioxide susceptor 34 ($>10^4$ ohm-cm at room temperature) is too high to directly couple to the alternating electromagnetic field of the activated RF coil 38. For this reason, the zirconium dioxide susceptor 34 is preheated by coupling the field to a carbon rod (not shown), axially inserted therein, at room temperature. Above 1000°C the susceptor 34 begins to couple to the electromagnetic field, and by approximately 1400°C the carbon rod can be withdrawn without thermally shocking the susceptor.

By this method the temperature of the furnace 10 is raised to the operating temperature in approximately 60 minutes. During operation, the temperature of the zirconium susceptor 34 is monitored and controlled with an infrared pyrometer (not shown) to within ±2°C of the desired set point. Fiber drawing temperatures normally used are between 1900°C and 2300°C depending upon the size of a preform and the fiber drawing velocity. At these temperatures typically 7 kilowatts of power are required for maintaining a steady state operation. Frequencies on the order of about 4 megahertz are required for efficient operation at those temperatures. The RF field does not couple to the grain 36 which is large particle sized and coarse grained. Thus, the grain 36 acts as an insulator to maintain an elevated temperature within the susceptor 34 during operation. The grain 36 is electrically fused zirconium dioxide [2.38—1.19 mm. (8 to 14 mesh)] manufactured by TAM Ceramics, Niagara Falls, New York.

Once the temperature within the susceptor 34 has reached the desired level (e.g., 2000°C), a solid, substantially cylindrical silica lightguide preform 44 (shown in phantom) is axially inserted therein until a first end 46 thereof is positioned at a "hot zone" which is located centrally in the susceptor within the RF coil 38. The elevated temperature heats the preform 44 to reflow a small volume 48 at the end thereof from which a lightguide fiber 52 is drawn.

Although such a technique has been most effective, after a period of time it has been found that very small particles of zirconium dioxide have deposited on the preform 44 and/or the fiber 52. Such particles are then drawn into and contaminate the lightguide fiber 52. Such contamination results in low strength fiber and substantially decreases fiber production yields. It is widely believed that the small zirconium dioxide particles emanate from microcracks formed in the susceptor 34 at elevated temperatures.

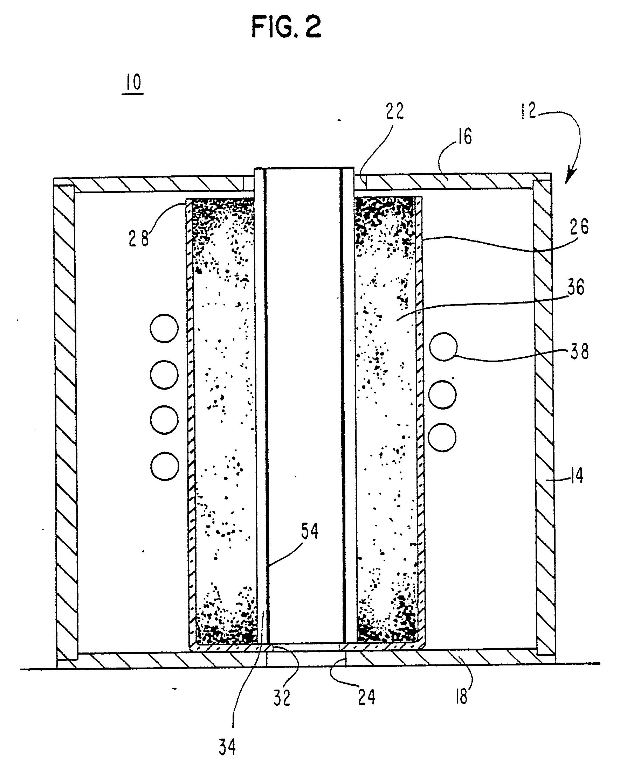

The instant invention overcomes the foregoing problem by depositing a thin layer of a soot of the same material (e.g., $SiO_2$) as that of the solid preform 44 onto the inside surface of the susceptor 34 prior to assembling the furnace 10. The susceptor 34 is then placed inside the furnace 10 as shown in FIG. 2 and the coil 38 activated to form the centralized hot zone within the susceptor having an elevated temperature about 2000°C which causes a portion of the preform 44 to reflow after consolidating the previously deposited soot into a consolidated layer 54 (FIG. 2). The fiber 52 is then drawn from the reflowing portion 48 of the preform 44 as previously described in reference to FIG. 1. The drawn fiber 52 has been found to be less contaminated resulting in substantially higher strength and a greater production yield than fibers drawn in furnaces 10 having uncoated susceptors 34. Alternatively, the susceptor 34 with the soot thereon may be placed in a separate furnace and heated to a temperature of about 1700°C to consolidate or sinter the soot into a consolidated soot layer 54. The susceptor 34 may then be removed and inserted in the induction furnace 10. Although the mechanism is not fully understood it is believed that a portion of the consolidated soot layer 54 diffuses into microcracks in the susceptor 34 to (1) form a seal and (2) act as a bond. Additionally, a very thin layer of the consolidated soot 54 remains on the surface of the susceptor 34 which substantially precludes particles from leaving that surface and undesirably migrating to the preform 44. Advantageously, any of the deposited, consolidated soot 54 which may evaporate from the surface of the susceptor 34 will not affect the drawn fiber 52 in as much as both the preform 44 and the consolidated soot are the same material.

The concept of depositing the silica soot ($SiO_2$) on the inside surface of the susceptor 34 would not readily occur to one skilled in the art for it would appear that a eutectic of the materials would be formed. Such a eutectic would undesirably affect the coupling efficiency of the electromagnetic field to the susceptor 34 resulting in lower and/or uncontrollable temperatures in the hot zone. Surprisingly, deposition and consolidating the silica soot into the consolidated soot layer 54 on the surface of the susceptor 34 does not deleteriously affect the operation of the furnace 10.

The soot was deposited on the inside surface of the susceptor 34 by rotating the susceptor on a lathe while directing a soot deposition torch therein. Once the desired thickness (e.g., 1 to 2 mm) was deposited the soot deposition torch was shut off and the coated susceptor 34 placed in a furnace as hereinbefore indicated.

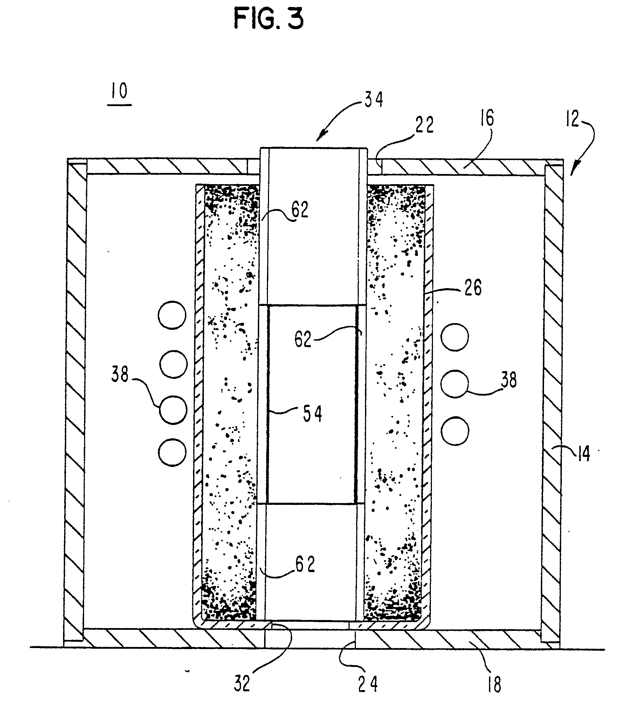

In an alternative embodiment, shown in FIG. 3, the susceptor 34 is comprised of a plurality of stacked susceptor tubes 62. Only the middle susceptor tube 62 has the coating of soot applied to the inner surface thereof which is then consolidated into consolidated soot layer 54 as hereinbefore set forth. The central location of the middle susceptor tube 62 substantially corresponds to the "hot zone" in which a portion of the preform 44 is caused to reflow in order for the fiber 52 to be drawn therefrom as shown in FIG. 1. Again, it has been found that such a coating substantially eliminates zirconium dioxide particles from migrating to the preform 44.

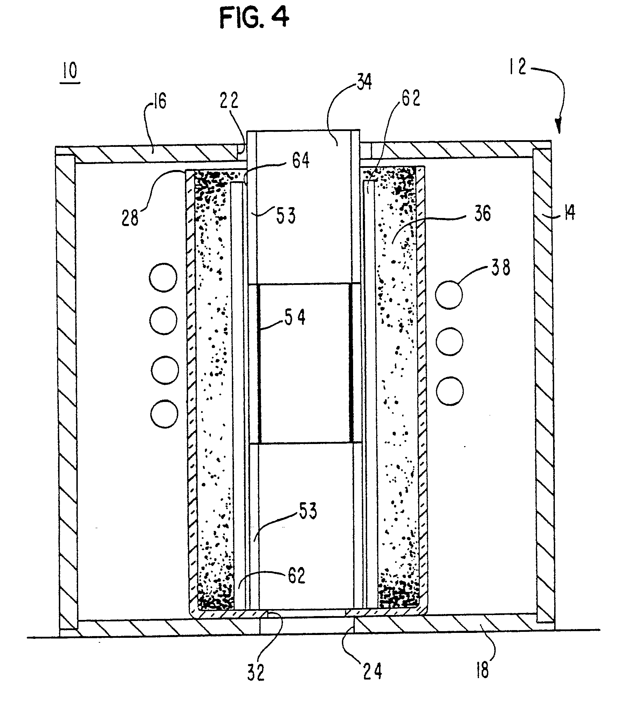

As hereinbefore indicated, the aforementioned technique works well when the cracks are relatively small (e.g., 0.038 cm [0.015 in width]), but larger cracks cannot be sealed using such a technique. It appears that microscopic zirconium dioxide particles from the grain 36 are drawn through the larger cracks by gas flows caused by a chimney effect within the susceptor 34. Accordingly, a further modification (see FIG. 4) has been implemented in accordance with this invention to substantially eliminate very small particles of zirconium dioxide from migrating from the grain 36 through such large cracks and depositing on the preform 44 and/or the fiber 52. FIG. 4 depicts a furnace 10 having a susceptor 34 comprised of three stacked zirconium dioxide tubes 53 in which a silica soot has been deposited on the inside surface of only the middle tube. Additionally, a zirconium dioxide cylinder 62 is positioned about and in spaced relation to the susceptor tubes 53 leaving a space 64 therebetween. The cylinder 62 is sufficiently less dense (e.g., 20 to 30% porosity) than the high density susceptor tubes 53 so as not to be inductively coupled to the electromagnetic field of the energized coil 38. The cylinder 62 is comprised of calcium stabilized zirconium dioxide coarse grain composition #1247 manufactured by Zircoa Company, Solon, Ohio.

As the furnace 10 is brought up to temperature, the silica soot consolidates on the inside of the middle susceptor tube 53 into a layer 54 as hereinbefore described to prevent particulate zirconium dioxide from migrating onto the lightguide preform 44. Furthermore, the cylinder 62 acts as a barrier to any microscopic particulate from the grain 36 that might be otherwise drawn through larger, unsealed cracks in the susceptor tubes 53.

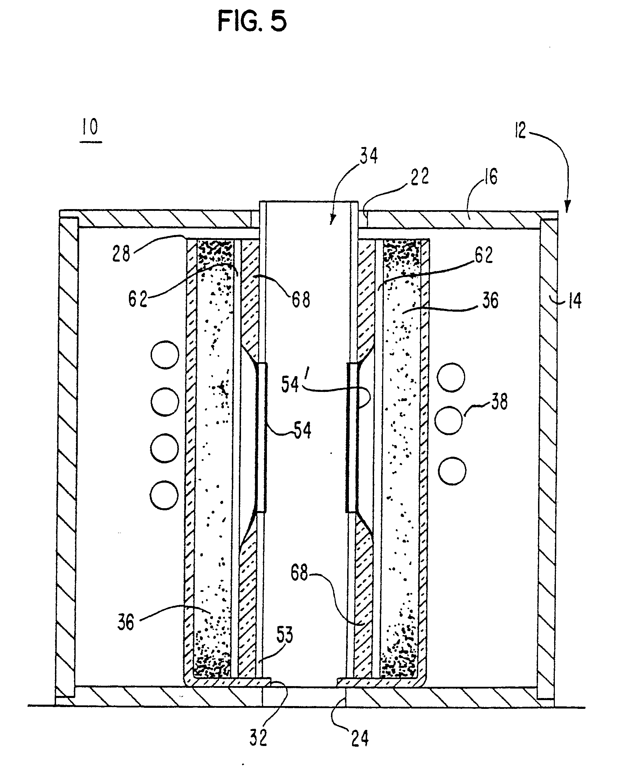

In a further embodiment shown in FIG. 5, the middle susceptor tube 53 was coated with a porous silica soot 68 on the outside surface in addition to the soot on the inside surface thereof. The soot 68 is also deposited on the outside surface only of the top and bottom susceptor tubes 53. (The distance between the outer surface of the susceptor tubes 53 and the inner surface of the cylinder 62 is not to scale and is exaggerated for purposes of clarity of exposition.) The coils 38 are energized to bring the furnace 10 up to temperature and the silica soot on both sides of the middle susceptor tube 53 consolidates into layers 54 and 54'. As can be seen in FIG. 3 the glass soot 68 on the outside surface of the top and bottom susceptor tubes 53 remains unconsolidated and tends to maintain a concentric alignment between the susceptor tubes 53 and the cylinder 62.

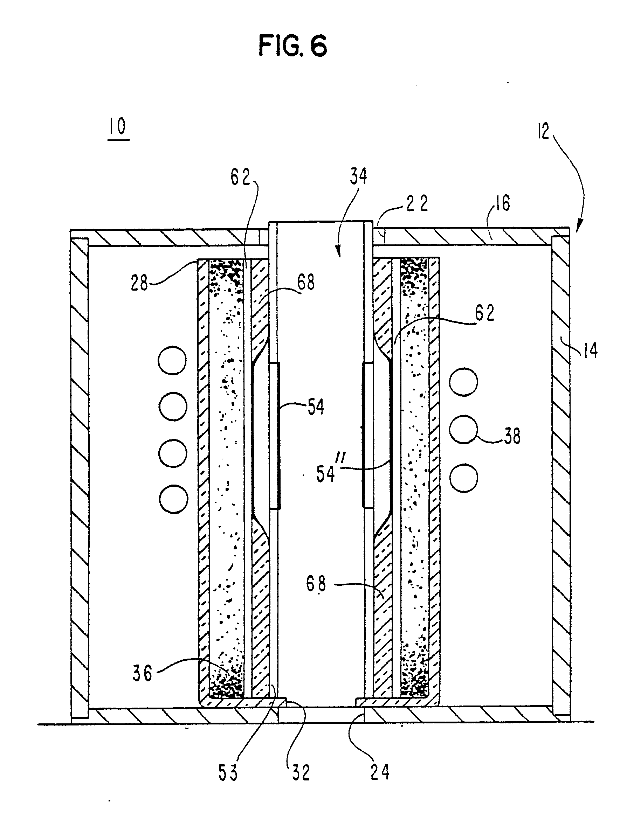

In yet a further embodiment of the instant invention shown in FIG. 6 the silica soot 68 was deposited on the inside surface of the cylinder 62 and snugly slipped about the susceptor tubes 53. The middle susceptor tube 53 was coated with silica soot on the inside surface thereof. Upon activation of the coils 38 the soot or the inside of the middle susceptor tube 53 is consolidated into a layer 54 and a portion of the silica soot 68 consolidated on the central, inside surface of the cylinder 62 into a consolidated soot layer 54'' while the rest of the soot remains porous or unconsolidated to maintain the spaced, concentric alignment between the susceptor tubes 53 and the cylinder 62.

Although an induction heating furnace has been described, the inventive concepts could be advantageously used in other furnaces (e.g., resistance) having centrally located tubular heating elements (i.e., muffles).

**Claims**

1. A method of fabricating a lightguide fiber, comprising the steps of:
   axially introducing a lightguide preform (44) into a furnace (10) having a tubular susceptor (34),
   activating an induction coil (38) surrounding the susceptor to reflow a portion of the preform therein; and
   drawing the fiber (52) from the reflown portion of the preform,
   characterized in that
   to prevent particles from migrating from the susceptor onto the lightguide fiber producing, prior to the introduction of the preform, a layer of soot of the lightguide preform material on at least a portion of the inside surface of the tubular susceptor and either prior to or simultaneously with said introduction, consolidating the soot into a thin coating.

2. The method according to claim 1, characterized by
   additionally producing a layer (68) of soot of the lightguide preform material between the susceptor (34) and a cylinder (62) interposed between the susceptor and the induction coil (38) and consolidating at least a portion of the soot into a thin coating (54', 54'').

3. The method according to claim 1, characterized by
   vapor depositing the layer of soot of the lightguide preform material on the inside surface of the susceptor and an additional layer of soot of the lightguide preform material either on the outside surface of the susceptor or on the inside surface of a cylinder (62) interposed between the susceptor (34) and the induction coil (38), said layers consisting e.g. of silica, and
   activating the induction coil to heat said susceptor to consolidate the soot layers into thin coatings (54, 54', 54'') to prevent particles from migrating from the susceptor.

4. An induction heating furnace for heating a lightguide preform to an elevated temperature in order to draw a fiber therefrom, the furnace (10) comprising:
   a tubular susceptor (34) surrounded by an insulating grain material (36), and
   an induction coil (38) surrounding the susceptor,
   characterized in that
   a thin coating (54) of the lightguide preform material is on at least a portion of the inside surface of the susceptor.

5. The furnace according to claim 4, characterized in that

a cylinder (62) is positioned about and spaced from the susceptor, interposed between the insulating grain material (36) and the susceptor (34).

6. The furnace according to claim 5, characterized in that

a soot layer (68) of the lightguide preform material is located between the cylinder (62) and the susceptor (34).

7. The furnace according to claim 6, characterized in that

a portion of the layer of soot of the lightguide preform material is consolidated on at least a portion of the outside surface of the susceptor (34) into a thin coating (54').

8. The furnace according to claim 6, characterized in that

a portion of the layer of soot of the lightguide preform material is consolidated on at least a portion of the inside surface of the cylinder (62) into a thin coating (54'').

9. The furnace according to any one of preceding claims 4—8, characterized in that

the preform material is fused silica, and the thin coating material is silica.

10. The furnace according to claim 9, characterized in that

the susceptor and the insulating grain material are of zirconium dioxide.

**Patentansprüche**

1. Verfahren zum Herstellen einer Lichtleit-Faser mit den Schritten
— axiales Einführen einer Lichtleit-Vorform (44) in einen Ofen (10) mit einer röhrenförmigen Beschickungskammer (34),
— Aktivieren einer die Beschickungskammer umgebenden Induktionsspule (38) zur Erweichung eines Teils der hierin befindlichen Vorform und
— Ziehen der Faser (52) vom erweichten Teil der Vorform,
dadurch gekennzeichnet, daß
— zur Verhinderung einer Partikelwanderung von der Beschickungskammer auf die Lichtleiterfaser vor der Einführung der Vorform eine Soot-Schicht des Lichtleit-Vorformmaterials auf wenigstens einem Teil der Innenfläche der röhrenförmigen Beschickungskammer erzeugt wird und
— der Soot zu einer dünnen Beschichtung entweder vor oder gleichzeitig mit der Einführung der Vorform konsolidiert wird.

2. Verfahren nach Anspruch 1, gekennzeichnet durch
— zusätzliches Erzeugen einer Soot-Schicht (68) des Lichtleit-Vorformmaterials zwischen der Beschickungskammer (34) und einem Zylinder (62), der zwischen der Beschickungskammer und der Induktionsspule (38) angeordnet ist, und
— Konsolidieren wenigstens eines Teils des Soots zu einer dünnen Beschichtung (54', 54'').

3. Verfahren nach Anspruch 1, gekennzeichnet durch
— Dampfniederschlagen der Soot-Schicht aus dem Lichtleitervorformmaterial auf die Innenfläche der Beschickungskammer und einer zusätzlichen Soot-Schicht aus dem Lichtleiter-Vorformmaterial entweder auf die Außenfläche der Beschickungskammer oder auf die Innenfläche eines Zylinders (62), der zwischen der Beschickungskammer (34) und der Induktionsspule (38) angeordnet ist, wobei die Schichten beispielsweise aus Siliciumoxid bestehen, und
— Aktivieren der Induktionsspule zur Erwärmung der Beschickungskammer, um die Soot-Schichtungen zu dünnen Beschichtungen (54, 54', 54'') zu konsolidieren und Partikel an einer Abwanderung von der Beschickungskammer zu hindern.

4. Induktionsheizofen zur Erwärmung einer Lichtleit-Vorform auf eine erhöhte Temperatur, um eine Faser hiervon zu ziehen, wobei der Ofen (10) umfaßt
— eine röhrenförmige Beschickungskammer (34), die von einem Isolierkornmaterial (36) umgeben ist, und
— eine die Beschickungskammer umgebende Induktionsspule (38),
dadurch gekennzeichnet,
— daß sich eine dünne Beschichtung (54) des Lichtleit-Vorformmaterials auf wenigstens einem Teil der Innenfläche der Beschickungskammer befindet.

5. Ofen nach Anspruch 4, dadurch gekennzeichnet, daß
— ein Zylinder (62) die Beschickungskammer im Abstand umgibt und zwischen dem Isolierkornmaterial (36) und der Beschickungskammer (34) angeordnet ist.

6. Ofen nach Anspruch 5, dadurch gekennzeichnet, daß
— eine Soot-Schicht (68) des Lichtleit-Vorformmaterials zwischen dem Zylinder (62) und der Beschickungskammer (34) angeordnet ist.

7. Ofen nach Anspruch 6, dadurch gekennzeichnet, daß
— ein Teil der Soot-Schicht aus dem Lichtleit-Vorformmaterial auf wenigstens einem Teil der Außenfläche der Beschickungskammer (34) zu einer dünnen Beschichtung (54') konsolidiert ist.

8. Ofen nach Anspruch 6, dadurch gekennzeichnet, daß
— ein Teil der Soot-Schicht aus dem Lichtleit-Vorformmaterial auf wenigstens einem Teil der Innenfläche des Zylinders (62) zu einer dünnen Beschichtung (54'') konsolidiert ist.

9. Ofen nach einem der vorstehenden Ansprüche 4 bis 8, dadurch gekennzeichnet, daß
— das Vorformmaterial erschmolzenes Siliciumoxid ist und
— das Material für die dünne Beschichtung Siliciumoxid ist.

10. Ofen nach Anspruch 9, dadurch gekennzeichnet, daß
die Beschickungskammer und das Isolierkornmaterial aus Zirkondioxid sind.

## Revendications

1. Un procédé de fabrication d'une fibre de guide de lumière comprenant les opérations suivantes:

on introduit axialement une préforme de guide de lumière (44) dans un four (10) comportant un suscepteur tubulaire (34),

on excite une bobine d'induction (38) entourant le suscepteur pour provoquer une refusion d'une partie de la préforme se trouvant à l'intérieur; et

on étire la fibre (52) à partir de la partie de la préforme soumise à refusion, caractérisé en ce que

pour empêcher la migration de particules à partir du suscepteur, vers la fibre de guide de lumière, on forme une couche de suie de la matière de la préforme de guide de lumière, avant l'introduction de la préforme, sur au moins une partie de la surface intérieure du suscepteur tubulaire et soit avant cette introduction, soit simultanément, on agglomère la suie pour former un revêtement mince.

2. Le procédé selon la revendication 1, caractérisé en ce que

on forme une couche (68) de suie de la matière de la préforme de guide de lumière entre le suscepteur (34) et un cylindre (62) intercalé entre le suscepteur et la bobine d'induction (38), et on agglomère au moins une partie de la suie pour former un revêtement mince (54', 54'').

3. Le procédé selon la revendication 1, caractérisé en ce que

on dépose en phase vapeur la couche de suie de la matière de la préforme de guide de lumière sur la surface intérieure du suscepteur et on dépose une couche supplémentaire de suie de la matière de la préforme de guide de lumière soit sur la surface extérieure du suscepteur, soit sur la surface intérieure d'un cylindre (62) intercalé entre le suscepteur (34) et la bobine d'induction (38), ces couches consistant par exemple en silice, et

on excite la bobine d'induction pour chauffer le suscepteur afin d'agglomérer les couches de suie pour former des revêtements minces (54, 54', 54'') destinés à empêcher la migration de particules à partir du suscepteur.

4. Un four de chauffage à induction destiné à chauffer une préforme de guide de lumière jusqu'à une température élevée, afin d'étirer une fibre à partir de la préforme, le four (10) comprenant:

un suscepteur tubulaire (34) entouré par une matière granulaire isolante (36), et

une bobine d'induction (38) entourant le suscepteur, caractérisé en ce que

un revêtement mince (54) de la matière de la préforme de guide de lumière est formé sur au moins une partie de la surface intérieure du suscepteur.

5. Le four selon la revendication 4, caractérisé en ce que

un cylindre (62) est placé autour du suscepteur et à distance de ce dernier, en étant intercalé entre la matière granulaire isolante (36) et le suscepteur (34).

6. Le four selon la revendication 5, caractérisé en ce que

une couche de suie (68) formée par la matière de la préforme de guide de lumière est placée entre le cylindre (62) et le suscepteur (34).

7. Le four selon la revendication 6, caractérisé en ce que

une partie de la couche de suie de la matière de la préforme de guide de lumière est agglomérée sur au moins une partie de la surface extérieure du suscepteur (34), pour former un revêtement mince (54).

8. Le four selon la revendication 6, caractérisé en ce que

une partie de la couche de suie de la matière de la préforme de guide de lumière est agglomérée sur au moins une partie de la surface intérieure du cylindre (62) pour former un revêtement mince (54'').

9. Le four selon l'une quelconque des revendications 4—8 précédentes, caractérisé en ce que

la matière de la préforme est de la silice fondue, et la matière de revêtement mince est de la silice.

10. Le four selon la revendication 9, caractérisé en ce que

le suscepteur et la matière granulaire isolante sont en dioxyde de zirconium.

# FIG. 1

(PRIOR ART)

## FIG. 2

# FIG. 3

FIG. 4

# FIG. 5

# FIG. 6